# EUROPEAN PATENT APPLICATION

(11) **EP 4 119 896 A2**
(43) Date of publication of application: **18.01.2023**
(21) Application number: 22210269.1
(22) Date of filing: 29.11.2022
(51) Int. Cl.: G01C 21/00

(54) **METHOD AND APPARATUS FOR PROCESSING HIGH-DEFINITION MAP DATA, ELECTRONIC DEVICE, MEDIUM AND PRODUCT**

(30) Priority: 29.11.2021 CN 202111438281
(71) Applicant: BEIJING BAIDU NETCOM SCIENCE AND TECHNOLOGY CO. LTD., 100085 Beijing (CN)
(72) Inventor: WANG, Chunhong, Beijing, 100085 (CN); WANG, Hao, Beijing, 100085 (CN); BAI, Yu, Beijing, 100085 (CN); HUANG, Jie, Beijing, 100085 (CN); PENG, Liang, Beijing, 100085 (CN)
(74) Representative: Nederlandsch Octrooibureau

(57) **Abstract**

A method and an apparatus for processing map data, a device, a medium, and a product are provided, which relates to a field of computer technology, in particular to fields of intelligent transportation technology and autonomous driving technology. The method for processing map data includes: acquiring an initial change information for a traffic object; acquiring incremental map data corresponding to the initial change information; determining, from the initial change information, a target change information based on the incremental map data and historical map data; and updating the historical map data based on the target change information -

## Description

### TECHNICAL FIELD

The present disclosure relates to a field of computer technology, in particular to fields of intelligent transportation technology and autonomous driving technology, and more specifically, to a method for processing map data, an apparatus for processing map data, an electronic device, a medium, and a program product.

### BACKGROUND

A high-definition map, also known as a high-precision map, is a map used by an autonomous vehicle. The high-definition map has accurate location information of a vehicle and rich road element data information, which can help the vehicle predict complex road information such as slope, curvature, heading, etc. in advance, so that potential risks can be better avoided. As traffic objects in a real world change frequently, it is necessary to update the map data in time. The traffic objects include, for example, roads, shopping malls, etc.

### SUMMARY

The present disclosure provides a method and an apparatus for processing map data, an electronic device, a storage medium, and a program product.

According to an aspect of the present disclosure, a method for processing map data is provided, and the method includes: acquiring an initial change information for a traffic object; acquiring incremental map data corresponding to the initial change information; determining, from the initial change information, a target change information based on the incremental map data and historical map data; and updating the historical map data based on the target change information.

According to another aspect of the present disclosure, an apparatus for processing map data is provided, and the apparatus includes: a first acquisition module, a second acquisition module, a determination module, and an updating module. The first acquisition module is used to acquire an initial change information for a traffic object; the second acquisition module is used to acquire incremental map data corresponding to the initial change information; the determination module is used to determine, from the initial change information, a target change information based on the incremental map data and historical map data; and the updating module is used to update the historical map data based on the target change information.

According to yet another aspect of the present disclosure, an electronic device is provided, and the electronic device includes: at least one processor; and a memory communicatively connected to the at least one processor, wherein the memory stores instructions executable by the at least one processor, and the instructions, when executed by the at least one processor, are used to cause the at least one processor to implement the method for processing map data described above.

According to yet another aspect of the present disclosure, a non-transitory computer-readable storage medium having computer instructions therein is provided, and the computer instructions are used to cause a computer system to implement the method for processing map data described above.

According to yet another aspect of the present disclosure, a computer program product containing a computer program is provided, and the computer program, when executed by a processor, is used to cause the processor to implement the method for processing map data described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 schematically shows an application scenario of a method and an apparatus for processing map data;
FIG. 2 schematically shows a flowchart of a method for processing map data according to an embodiment of the present disclosure;
FIG. 3 schematically shows a schematic diagram of a method for processing map data according to an embodiment of the present disclosure;
FIG. 4 schematically shows a schematic diagram of a method for processing map data according to another embodiment of the present disclosure;
FIG. 5 schematically shows a block diagram of an apparatus for processing map data according to an embodiment of the present disclosure; and
FIG. 6 shows a block diagram of an electronic device for implementing a method for processing map data according to embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The terms used herein are merely for describing specific embodiments, and are not intended to limit the present disclosure. The terms "comprising", "including", etc. indicate the presence of features, steps, operations and/or components, but do not exclude the presence or addition of one or more other features, steps, operations or components.

All terms (including technical and scientific terms) used herein have the meaning as commonly understood by one of ordinary skill in the art, unless otherwise defined. It should be noted that terms used herein should be construed to have meanings consistent with the context of the present disclosure and should not be construed in an idealized or overly rigid manner.

When expressions similar to "at least one selected from A, B, or C" are used, these expressions should be generally interpreted in accordance with the meaning of the expressions that those skilled in the art usually understand (for example, "a system having at least one selected from A, B, or C" should include, but is not limited to, a system having A alone, having B alone, having C alone, having A and B, having A and C, having B and C, and/or having A, B, or C).

An embodiment of the present disclosure provides a method for processing map data, including: acquiring an initial change information for a traffic object; acquiring incremental map data corresponding to the initial change information; determining, from the initial change information, a target change information based on the incremental map data and historical map data; and updating the historical map data based on the target change information.

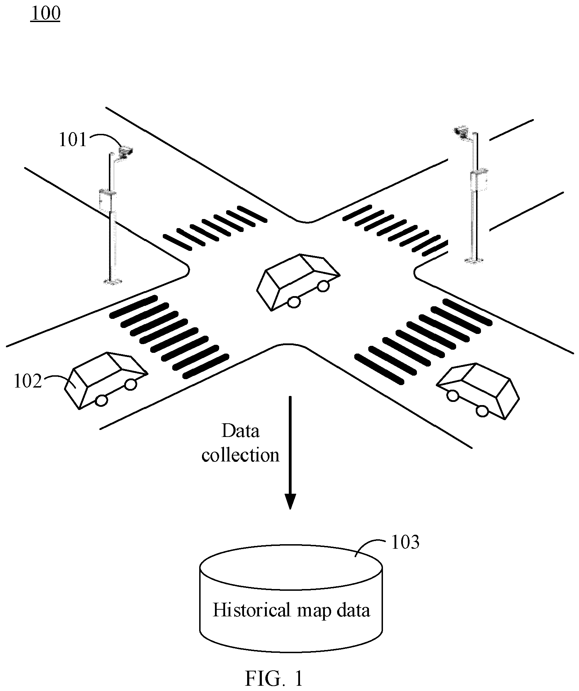

FIG. 1 schematically shows an application scenario of a method and an apparatus for processing map data. It should be noted that FIG. 1 is merely an example of an application scenario to which embodiments of the present disclosure may be applied, so as to help those skilled in the art to understand the technical content of the present disclosure, but it does not mean that embodiments of the present disclosure cannot be applied to other devices, systems, environments, or scenarios.

As shown in FIG. 1, an application scenario 100 according to embodiments may include data collection devices 101 and 102.

The data collection devices 101 and 102 may include, for example, various types of devices, including but not limited to a camera, a vehicle, etc. The vehicle may include an autonomous driving vehicle for collection, online hailing vehicle, private car, etc.

The data collection devices 101 and 102 are used to collect data of a traffic object. Then, historical map data 103 may be updated based on the data collected by the data collection devices 101 and 102.

For example, when a traffic object in a real world changes, the historical map data 103 is required to be updated in time. The traffic object includes, for example, a road, a traffic light, a shopping mall, etc. The historical map data 103 may include high-definition map data.

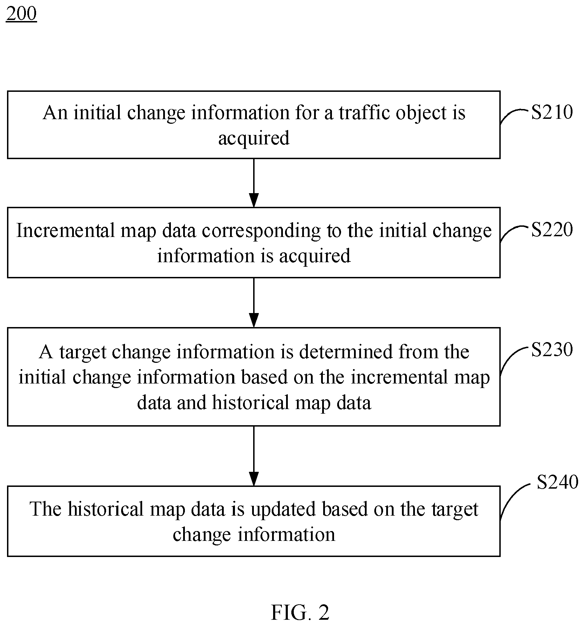

An embodiment of the present disclosure provides a method for processing map data. The method for processing map data according to exemplary embodiments of the present disclosure will be described below with reference to FIGS. 2 to 4 in combination with the application scenario of FIG. 1.

FIG. 2 schematically shows a flowchart of a method for processing map data according to an embodiment of the present disclosure.

As shown in FIG. 2, the method 200 for processing map data according to embodiments of the present disclosure may include, for example, operations S210 to S240.

In operation S210, an initial change information for the traffic object is acquired.

In operation S220, incremental map data corresponding to the initial change information is acquired.

In operation S230, a target change information is determined from the initial change information based on the incremental map data and historical map data.

In operation S240, the historical map data is updated based on the target change information.

For example, the traffic object may include a road, a traffic light, a shopping mall, etc. The initial change information indicates, for example, which traffic object has changed. Then, the incremental map data corresponding to the initial change information may be acquired. For example, when the initial change information indicates that a certain traffic road has changed, the incremental map data related to the traffic road is acquired, and the incremental map data represents a current information of the traffic road.

As the initial change information preliminarily represents the changed traffic object, and the incremental map data is also the relevant data to preliminarily represent the changed traffic object, in order to more accurately determine an information of a traffic object that has actually changed from the initial change information, the incremental map data may be compared with the historical map data, so as to determine the target change information from the initial change information. The target change information represents, for example, the traffic object that has actually changed.

After determining the target change information, the historical map data may be updated based on the target change information, for example, the traffic object that has changed in the historical map data may be updated. The incremental map data and the historical map data may be, for example, high-definition map data.

It may be understood that, the high-definition map has a high requirement for a timely update, and different from a method in which data of all traffic objects is collected to perform a full update of the historical map data, which may cause a problem of high update costs and low update efficiency, the method according to embodiments of the present disclosure may be implemented to acquire the initial change information and the corresponding incremental map data, and then determine the target change information from the initial change information, so as to update the historical map data based on the target change information pertinently, and thus the update efficiency is improved and the update costs are reduced.

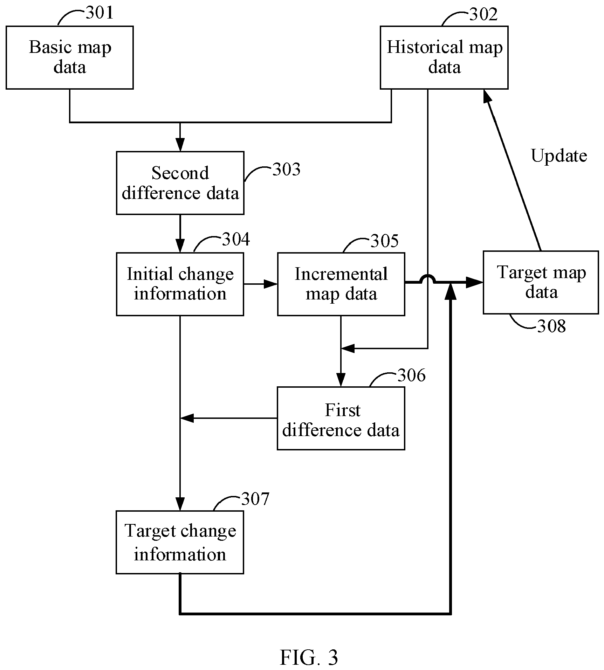

FIG. 3 schematically shows a schematic diagram of a method for processing map data according to an embodiment of the present disclosure.

As shown in FIG. 3, for the initial change information 304 of the traffic object, the historical map data 302 may be compared with basic map data 301 to obtain second difference data 303 between the historical map data 302 and the basic map data 301, and then a label information corresponding to the second difference data 303 is determined as the initial change information 304.

For example, the historical map data 302 includes high-definition map data, and the historical map data is map data to be updated. The basic map data 301 may include ordinary map data, and an update speed of the basic map data 301 is usually faster than an update speed of the historical map data 302. Therefore, the basic map data 301 may be used as a reference to determine which traffic object has changed. The second difference data 303 includes, for example, data of different traffic objects between the basic map data 301 and the historical map data 302.

The label information corresponding to the second difference data 303 includes, for example, a label of the traffic object. The label information includes, for example, a location information of the traffic object, an attribute of the traffic object, a change type of the traffic object, etc., and the label information may be used as the initial change information 304.

In another example, a reported change information may be acquired and used as the initial change information 304.

According to embodiments of the present disclosure, the basic map data with a fast update speed is used as a reference to determine the second difference data for the historical map data, and then the initial change information is acquired based on the second difference data, so that the efficiency of acquiring the initial change information is improved.

After the initial change information 304 is acquired, it is possible to further determine, from the initial change information 304, the more accurate target change information 307.

For example, as the incremental map data 305 corresponds to the initial change information 304, the incremental map data 305 may include some redundant map data. For example, the redundant map data is the same as some data in the historical map data 302, that is, the redundant map data is the data that has not changed. Therefore, in order to determine the actually changed target change information 307 from the initial change information 304, the incremental map data 305 may be compared with the historical map data 302 to obtain a first difference data 306 between the incremental map data 305 and the historical map data 302. The first difference data 306 may be, for example, data in the incremental map data 305 other than the above-mentioned redundant map data. That is, the first difference data 306 is different from the data in the historical map data 302.

After the first difference data 306 is obtained, a change information corresponding to the first difference data 306 may be determined from the initial change information 304 as the target change information 307.

According to embodiments of the present disclosure, in order to improve the accuracy of the change information, the first difference data is obtained by comparing the incremental map data with the historical map data, and then the more accurate target change information is determined from the initial change information based on the first difference data, so as to improve the accuracy of target change information.

After the target change information 307 is obtained, target map data 308 corresponding to the target change information 307 may be determined from the incremental map data 305 based on the target change information 307, and then the historical map data 302 may be updated based on the target map data 308, thereby obtaining the updated historical map data.

According to embodiments of the present disclosure, different from a method in which a full update of the historical map data is performed, by determining the target map data from the incremental map data and updating the historical map data based on the target map data, the update efficiency of the historical map data may be improved and the update costs may be reduced.

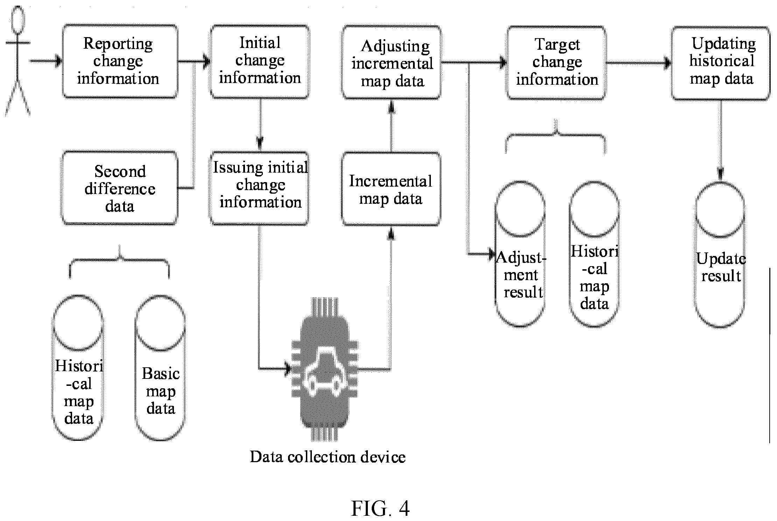

FIG. 4 schematically shows a schematic diagram of a method for processing map data according to another embodiment of the present disclosure.

As shown in FIG. 4, the initial change information may be acquired, for example, in two ways. In one way, the reported change information may be received, and the reported change information may be used as the initial change information. In the other way, the historical map data may be compared with the basic map data with the fast update speed, so as to obtain the second difference data between the historical map data and the basic map data, and then the label information of the traffic object corresponding to the second difference data is used as the initial change information.

After the initial change information is obtained, the incremental map data for the initial change information may be acquired in following two ways.

FIG. 4 shows one way in which the initial change information is sent to the data collection device, and the data collection device may collect the incremental map data based on the initial change information. The data collection device may include an autonomous driving vehicle for collecting data, where the autonomous driving vehicle may collect the incremental map data based on the initial change information while traveling on a road. Then, the incremental map data collected by the autonomous driving vehicle is received.

It may be understood that, by sending the initial change information to the data collection device to instruct the data collection device to collect the incremental map data, a data volume of the incremental map data is reduced, thereby improving a subsequent speed for processing the incremental map data and reducing costs for processing the data.

In the other way, initial collection data from the data collection device is directly received, where the data collection device may include a camera at an intersection, an online hailing vehicle traveling on a road, a private car, etc.

As a data volume of the initial collection data from the camera, the online hailing vehicle and the private car is relatively large, and the initial collection data includes not only the data of the changed traffic object, but also the data of other unchanged traffic object, it is necessary to select, from the initial collection data, the collection data corresponding to the initial change information based on the initial change information as the incremental map data.

It may be understood that by receiving the initial collection data from the data collection device and selecting the incremental map data from the initial collection data, the flexibility of the data collection device may reduce the costs of data collection.

After the incremental map data is obtained, the incremental map data may be automatically processed through an algorithm. For example, a data type of the incremental map data may be adjusted to obtain an adjustment result.

For example, the data type of the incremental map data is adjusted based on a data type corresponding to the historical map data, and the obtained adjustment result includes the adjusted incremental map data. For example, the data type of the adjusted incremental map data is the same as the data type of the historical map data.

Then, the adjusted incremental map data is compared with the historical map data to obtain the first difference data between the incremental map data and the historical map data, and the target change information is determined from the initial change information based on the first difference data.

Next, based on the target change information, the target map data that has actually changed is determined from the incremental map data or the adjusted incremental map data, the historical map data is updated based on the target map data, and the obtained update result includes the updated historical map data.

For example, the initial change information or the target change information includes, for example, a location information of the traffic object, an attribute of the traffic object, a change type of the traffic object, etc. The traffic object includes, for example, a road, a lane line, a traffic light, a shopping mall, etc. The location information includes, for example, a coordinate information. The attribute includes, for example, an attribute of a road, an attribute of a lane line, an attribute of a traffic light, an attribute of a shopping mall, etc. The change type includes a deletion type, an addition type, an attribute modification type, a location change type, etc.

The solution of updating map data proposed by embodiments of the present disclosure may be implemented to save the costs of collecting map data, shorten a length of time of collecting map data, reduce the computing resources occupied by data processing or data updating, improve the efficiency of updating map data, and shorten the cycle of updating map data.

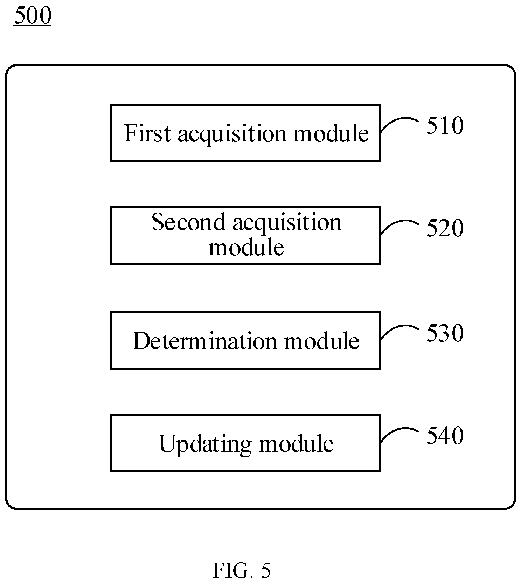

FIG. 5 schematically shows a block diagram of an apparatus for processing map data according to an embodiment of the present disclosure.

As shown in FIG. 5, the apparatus 500 for processing map data according to an embodiment of the present disclosure includes, for example, a first acquisition module 510, a second acquisition module 520, a determination module 530, and an updating module 540.

The first acquisition module 510 may be used to acquire initial change information for a traffic object. According to an embodiment of the present disclosure, the first acquisition module 510 may perform, for example, the operation S210 described above with reference to FIG. 2, which will not be repeated here.

The second acquisition module 520 may be used to acquire incremental map data corresponding to the initial change information. According to an embodiment of the present disclosure, the second acquisition module 520 may perform, for example, the operation S220 described above with reference to FIG. 2, which will not be repeated here.

The determination module 530 may be used to determine, from the initial change information, a target change information based on incremental map data and historical map data. According to an embodiment of the present disclosure, the determination module 530 may perform, for example, the operation S230 described above with reference to FIG. 2, which will not be repeated here.

The updating module 540 may be used to update the historical map data based on the target change information. According to an embodiment of the present disclosure, the updating module 540 may perform, for example, the operation S240 described above with reference to FIG. 2, which will not be repeated here.

According to an embodiment of the present disclosure, the determination module 530 includes: a first comparison sub-module and a first determination sub-module. The first comparison sub-module is used to compare the incremental map data with the historical map data to obtain a first difference data between the incremental map data and the historical map data. The first determination sub-module is used to determine a change information corresponding to the first difference data from the initial change information as the target change information

According to an embodiment of the present disclosure, the first acquisition module 510 includes: a second comparison sub-module and a second determination sub-module. The second comparison sub-module is used to compare the historical map data with basic map data to obtain a second difference data between the historical map data and the basic map data. The second determination sub-module is used to determine a label information corresponding to the second difference data as the initial change information.

According to an embodiment of the present disclosure, the updating module 540 includes: a third determination sub-module and an updating sub-module. The third determination sub-module is used to determine, from the incremental map data, target map data corresponding to the target change information based on the target change information. The updating sub-module is used to update the historical map data based on the target map data.

According to an embodiment of the present disclosure, the second acquisition module 520 includes: a sending sub-module and a first receiving sub-module. The sending sub-module is used to send the initial change information. The first receiving sub-module is used to receive the incremental map data collected based on the initial change information.

According to an embodiment of the present disclosure, the second acquisition module 520 includes: a second receiving sub-module and a selection sub-module. The second receiving sub-module is used to receive initial collection data. The selection sub-module is used to select, from the initial collection data, collection data corresponding to the initial change information based on the initial change information as the incremental map data.

According to an embodiment of the present disclosure, the first comparison sub-module includes: an adjustment unit and a comparison unit. The adjustment unit is used to adjust a data type of the incremental map data based on a data type corresponding to the historical map data, so as to obtain adjusted incremental map data. The comparison unit is used to compare the adjusted incremental map data with the historical map data, so as to obtain the first difference data between the incremental map data and the historical map data.

According to an embodiment of the present disclosure, the initial change information or the target change information includes at least one selected from: a location information of the traffic object, an attribute of the traffic object, or a change type of the traffic object.

In the technical solution of the present disclosure, the collection, storage, use, processing, transmission, provision, disclosure and application of traffic information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

According to an embodiment of the present disclosure, the present disclosure further provides an electronic device, a readable storage medium, and a computer program product.

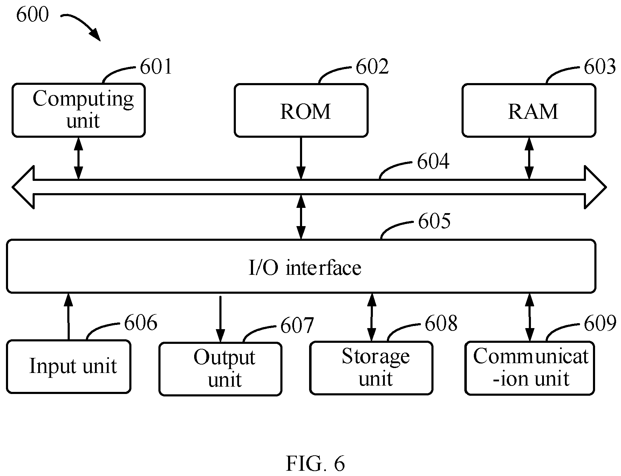

FIG. 6 shows a block diagram of an electronic device for implementing a method for processing map data according to embodiments of the present disclosure.

FIG. 6 shows a schematic block diagram of an exemplary electronic device 600 for implementing embodiments of the present disclosure. The electronic device 600 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the method for processing map data. For example, in some embodiments, the method for processing map data may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method for processing map data described above. Alternatively, in other embodiments, the computing unit 601 may be configured to perform the method for processing map data by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable map data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method for processing map data, comprising:
acquiring (S210) an initial change information for a traffic object;
acquiring (S220) incremental map data corresponding to the initial change information;
determining (S230), from the initial change information, a target change information based on the incremental map data and historical map data; and
updating (S240) the historical map data based on the target change information.

2. The method of claim 1, wherein the determining, from the initial change information, a target change information based on the incremental map data and historical map data comprises:
comparing the incremental map data with the historical map data to obtain a first difference data between the incremental map data and the historical map data; and
determining, from the initial change information, a change information corresponding to the first difference data as the target change information.

3. The method of claim 1 or 2, wherein the acquiring an initial change information for a traffic object comprises:
comparing the historical map data with basic map data to obtain a second difference data between the historical map data and the basic map data; and
determining a label information corresponding to the second difference data as the initial change information.

4. The method of any one of claims 1 to 3, wherein the updating the historical map data based on the target change information comprises:
determining, from the incremental map data, target map data corresponding to the target change information based on the target change information; and
updating the historical map data based on the target map data.

5. The method of claim 1, wherein the acquiring incremental map data corresponding to the initial change information comprises:
sending the initial change information; and
receiving the incremental map data collected based on the initial change information.

6. The method of claim 1, wherein the acquiring incremental map data corresponding to the initial change information comprises:
receiving initial collection data; and
selecting, from the initial collection data, collection data corresponding to the initial change information based on the initial change information as the incremental map data.

7. The method of claim 2, wherein the comparing the incremental map data with the historical map data to obtain a first difference data between the incremental map data and the historical map data comprises:
adjusting a data type of the incremental map data based on a data type corresponding to the historical map data, so as to obtain adjusted incremental map data; and
comparing the adjusted incremental map data with the historical map data to obtain the first difference data between the incremental map data and the historical map data.

8. The method of any one of claims 1 to 7, wherein the initial change information or the target change information comprises at least one selected from:
a location information of the traffic object, an attribute of the traffic object, or a change type of the traffic object.

9. An apparatus for processing map data, comprising:
a first acquisition module (510), configured to acquire an initial change information for a traffic object;
a second acquisition module (520), configured to acquire incremental map data corresponding to the initial change information;
a determination module (530), configured to determine, from the initial change information, a target change information based on the incremental map data and historical map data; and
an updating module (540), configured to update the historical map data based on the target change information.

10. The apparatus of claim 9, wherein the determination module (530) comprises:
a first comparison sub-module, configured to compare the incremental map data with the historical map data to obtain a first difference data between the incremental map data and the historical map data; and
a first determination sub-module, configured to determine, from the initial change information, a change information corresponding to the first difference data as the target change information.

11. The apparatus of claim 9 or 10, wherein the first acquisition module (510) comprises:
a second comparison sub-module, configured to compare the historical map data with basic map data to obtain a second difference data between the historical map data and the basic map data; and
a second determination sub-module, configured to determine a label information corresponding to the second difference data as the initial change information.

12. The apparatus of any one of claims 9 to 11, wherein the updating module (540) comprises:
a third determination sub-module, configured to determine, from the incremental map data, target map data corresponding to the target change information based on the target change information; and
an updating sub-module, configured to update the historical map data based on the target map data.

13. An electronic device (600), comprising:
at least one processor; and
a memory communicatively connected to the at least one processor,
wherein the memory stores instructions executable by the at least one processor, and the instructions, when executed by the at least one processor, are configured to cause the at least one processor to implement the method of any one of claims 1 to 8.

14. A non-transitory computer-readable storage medium having computer instructions therein, wherein the computer instructions are configured to cause a computer system to implement the method of any one of claims 1 to 8.

15. A computer program product containing a computer program, wherein the computer program, when executed by a processor, is configured to cause the processor to implement the method of any one of claims 1 to 8.
